# EUROPÄISCHE PATENTANMELDUNG

(11) **EP 1 040 780 A1**
(43) Veröffentlichungstag der Anmeldung: **04.10.2000**
(21) Anmeldenummer: 00106318.9
(22) Anmeldetag: 23.03.2000
(51) Int. Cl.: A47J 31/40

(54) **Kaffeemaschine**

(30) Priorität: 01.04.1999 DE 19915045
(71) Anmelder: WMF WÜRTTEMBERGISCHE METALLWARENFABRIK AG, 73309 Geislingen/Steige (DE)
(72) Erfinder: Boss, Reinhard, 73312 Geislingen/Steige (DE); Hofmann, Uwe, 73337 Bad Überkingen (DE); Jäger, Peter, 73312 Geislingen/Steige (DE); Motsch, Hans, 73312 Geislingen/Steige (DE); Riesenegger, Helmut, 89312 Günzburg (DE); Thaler, Bernd, 73329 Kuchen (DE)
(74) Vertreter: Grünecker, Kinkeldey, Stockmair & Schwanhäusser Anwaltssozietät

(57) **Zusammenfassung**

Es wird eine Kaffeemaschine mit einer selbsttätig arbeitenden Brüheinrichtung und einer Handeinwurf-Einrichtung (8) mit einer Einfüllöffnung zum manuellen Eingeben von Kaffeemehl in die Brüheinrichtung beschrieben. Um eine derartige Kaffeemaschine so auszugestalten, daß auch im Handeinwurf eine optimale Arbeitsweise der Brüheinrichtung (5) und ein optimales Brühergebnis gewährleistet ist, wird vorgeschlagen, der Handeinwurf-Einrichtung eine Schutzvorrichtung (12) zuzuordnen, die eine Überfüllung der Brüheinrichtung (5) mit Kaffeemehl verhindert.

## Beschreibung

Die Erfindung bezieht sich auf eine Kaffeemaschine der im Oberbegriff von Anspruch 1 erläuterten Art.

Sogenannte automatische Kaffeemaschinen, d.h. Kaffeemaschinen, die auf Knopfdruck selbsttätig einen Brühvorgang einleiten, durchführen und das Kaffeegetränk ausgeben, weisen normalerweise Vorratsbehälter für Kaffeemehl oder Kaffeebohnen mit zugeordnetem Mahlwerk auf die selbsttätig diejenige Menge Kaffeemehl in die Brüheinrichtung leiten, die für die angeforderte Kaffeemenge, die verarbeitete Kaffeequalität und die technische Ausgestaltung der Brüheinrichtung optimal ist. Die Zahl der Vorratsbehälter und somit die Zahl der bevorrateten Kaffeesorten ist jedoch begrenzt, zum einen aus Platzgründen und zum anderen deswegen, weil manche Kaffeesorten so wenig gefragt sind, daß ein großer Kaffeevorrat nicht in der angemessenen Zeit aufgebraucht werden kann, um eine gleichmäßige Qualität zu gewährleisten. Einige automatisch arbeitende Kaffeemaschinen haben deshalb einen zusätzlichen Handeinwurf, über den das Bedienpersonal Kaffeemehl manuell in die Brüheinrichtung eingeben kann, um beispielsweise seltener verlangte Kaffeesorten in guter Qualität bereitstellen zu können. Trotz Mitlieferung eines entsprechend ausgebildeten Meßlöffels für eine angemessene Menge Kaffeemehl, kommt es immer wieder vor, daß das Bedienpersonal nach der Devise "viel hilft viel" überdosiert. Abgesehen davon, daß der Betrieb der Brüheinrichtung so gestaltet ist, daß bei einer vorgegebenen Kaffeemehlmenge ein optimales Kaffeegetränk erzielt werden kann, eine Überdosierung somit nur den Kaffeemehlverbrauch erhöht, besteht weiterhin die Gefahr, daß die Brüheinrichtung überfüllt wird und nicht mehr optimal arbeiten kann.

Es ist deshalb die Aufgabe der vorliegenden Erfindung, eine Kaffeemaschine mit Handeinwurf so auszubilden, daß auch beim Handeinwurf eine optimale Arbeitsweise der Brüheinrichtung und ein optimales Endergebnis gewährleistet wird.

Die Aufgabe wird durch die im Anspruch 1 angegebenen Merkmale gelöst.

Die erfindungsgemäße Kaffeemaschine ist mit einer Schutzvorrichtung versehen, durch die beim manuellen Dosieren zuverlässig das Überfüllen der Brüheinrichtung mit Kaffeemehl auch bei einer eher großzügigen Bemessung des Kaffeemehls verhindert wird.

Die Schutzvorrichtung kann gemäß Anspruch 2 bevorzugt als Dosiereinrichtung für Kaffeemehl ausgebildet sein, die sicherstellt, daß nur die dosierte Menge in die Brüheinrichtung gelangt, wobei die Dosiermenge etwa der optimalen Kaffeemehlmenge entsprechen sollte, auf die die Kaffeemaschine eingestellt ist.

Eine besonders bevorzugte Ausgestaltung dieser Dosiereinrichtung ist den Ansprüchen 3 bis 11 zu entnehmen.

Die Schutzvorrichtung kann weiterhin gemäß Anspruch 12 eine steuerbare Sperreinrichtung enthalten, die insbesondere Mehrfachdosierungen verhindert.

Vorteilhafte konstruktive Ausgestaltungen dieser Sperreinrichtung sind den Ansprüchen 13 bis 15 zu entnehmen.

Anspruch 16 beschreibt eine besonders bevorzugte Ausgestaltung des Handeinwurfs, der sich beispielsweise auch besonders gut zur Nachrüstung bereits bestehender Kaffeemaschinen eignet. Dabei kann es unter Umständen ausreichen, um eine Überfüllung der Brüheinrichtung zu verhindern, wenn die Abdeckung selbst als Dosierbehälter ausgebildet ist, da dadurch beispielsweise das Bedienpersonal bei Verlust des vorgegebenen Meßlöffels nicht versucht ist, irgendein anderes Gefäß, das meist größer als der Meßlöffel ist, zum manuellen Eingeben des Kaffeemehls zu verwenden.

Ein Ausführungsbeispiel der Erfindung wird nachfolgend anhand der Zeichnungen näher erläutert. Es zeigen:
- Fig. 1: eine schematische Darstellung einer erfindungsgemäß ausgerüsteten Kaffeemaschine,
- Fig. 2: einen Längsschnitt durch den Handeinwurf nach Fig. 1 mit geschlossener Abdeckung,
- Fig. 3: eine Draufsicht auf den Handeinwurf nach Fig. 2,
- Fig. 4: einen Längsschnitt durch den Handeinwurf in Aufnahmestellung, und
- Fig. 5: einen Längsschnitt durch den Handeinwurf in einer Zwischenstellung.

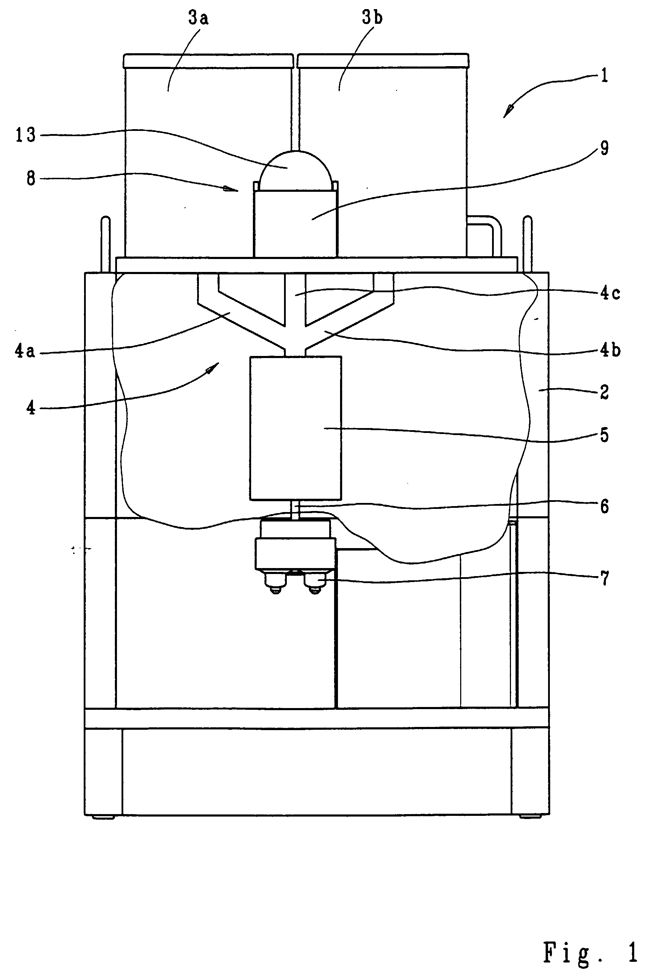

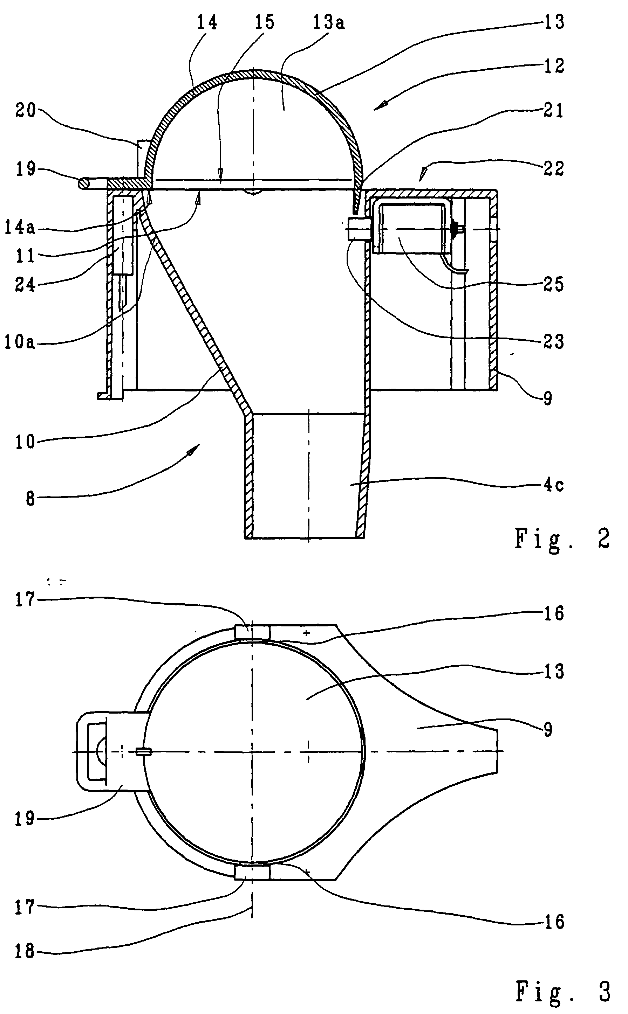

Aus Fig. 1 ist in schematischer Darstellung eine Kaffeemaschine 1 ersichtlich, die zum selbsttätigen Brühen und Ausgeben eines Kaffeegetränkes ausgebildet ist. Zu diesem Zweck enthält die Kaffeemaschine 1 ein Gehäuse 2, auf dem im vorliegenden Ausführungsbeispiel zwei Vorratsbehälter 3a und 3b für Kaffeemehl sitzen. Das Gehäuse 2 umschließt die für automatisch arbeitende Kaffeemaschinen notwendigen oder wünschenswerten Bauteile, wie dies im Stand der Technik bekannt ist, so daß diese nicht mehr erläutert werden müssen. Insbesondere umschließt das Gehäuse 2 eine Zufuhreinrichtung 4 für Kaffeemehl und eine Brüheinrichtung 5, die über eine Auslaufleitung 6 mit an der Außenseite des Gehäuses 2 angeordneten Ausläufen 7, im dargestellten Falle sind es zwei Ausläufe, in Verbindung steht, unter die die zu befüllenden Gefäße gestellt werden können. Weiterhin sind die üblichen, nicht-gezeichneten Bedienelemente in Form von Dreh- oder Druckknöpfen bzw. Tastenfeldern vorgesehen, die mit einer ebenfalls nicht gezeichneten Steuerung für die Brühvorgänge verbunden sind. Mit Hilfe dieser Bedienelemente kann das Bedienungspersonal die gewünschte Kaffeeart in der gewünschten Menge vorwählen, und die Steuerung sorgt dafür, daß der vorprogrammierte Ablauf des entsprechenden Brühvorganges mit der Eindosierung von Kaffeemehl und Wasser eingeleitet, durchgeführt und mit der Ausgabe des Getränkes beendet wird. Weiterhin ist ein Betätigungsmittel vorgesehen, mit dem eine automatische Eindosierung von Kaffeemehl unterdrückt werden kann.

Die Zufuhreinrichtung 4 für Kaffeemehl enthält Zufuhrleitungen 4a und 4b von jedem der Vorratsbehälter 3a, 3b und eine Zufuhrleitung 4c von einer Handeinwurf-Vorrichtung 8, die ebenfalls auf der Oberseite des Gehäuses 2 angeordnet ist.

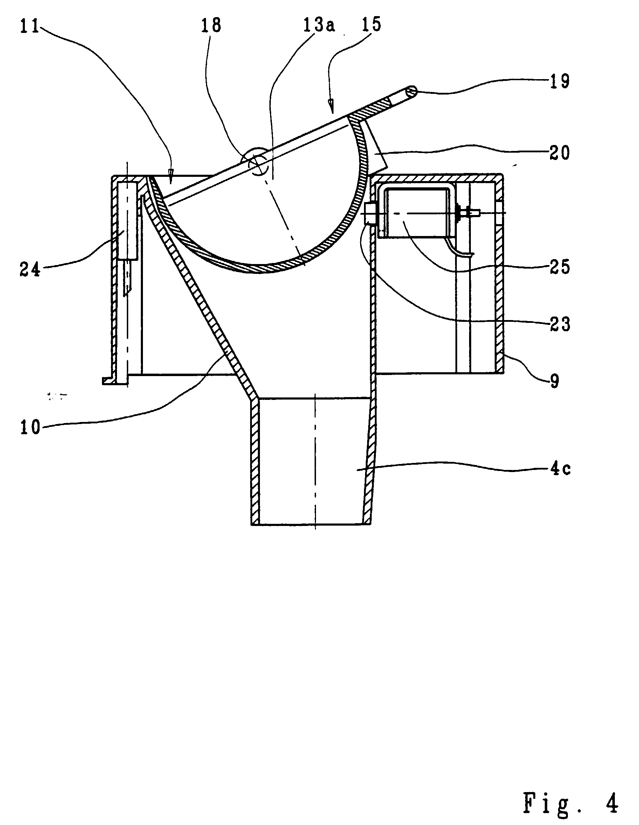

Der Handeinwurf 8 enthält ein Gehäuse 9, in dem ein Trichter 10 untergebracht ist, der von einer Einfüllöffnung 11 größeren Durchmessers auf den kleineren Durchmesser der Zufuhrleitung 4c überleitet. Dem Handeinwurf 8 ist eine als Ganzes mit 12 bezeichnete Schutzvorrichtung zugeordnet, die verhindern soll, daß zu viel Kaffeemehl in die Brüheinrichtung 5 gelangt. Im vorliegenden Ausführungsbeispiel enthält die Schutzvorrichtung 12 eine Abdeckung 13 für die Einfüllöffnung 11 des Einfülltrichters 10, die als Dosierbehälter für Kaffeemehl ausgebildet ist. Zu diesem Zweck enthält die Abdeckung 13 einen halbkugligen Dosier-Innenraum 13a umschließende Wandung 14, deren Randbereich 14a eine Aufnahmeöffnung 15 begrenzt. Die Aufnahmeöffnung 15 ist, wie Fig. 3 zeigt, ebenso wie die Einfüllöffnung 11, kreisförmig ausgebildet und der Durchmesser der Aufnahmeöffnung 15 ist bevorzugt um die Stärke der Wandung 14 kleiner als der Durchmesser der Einfüllöffnung 11, so daß das im Inneren der halbkugelförmigen Wandung 14 enthaltene Kaffeemehl ohne Verlust in den Trichter 10 gelangen kann. Das Volumen des Dosier-Innenraums 13a ist so ausgebildet, daß eine gehäufte Füllung das Fassungsvermögen der Brüheinrichtung nicht übersteigt und entspricht entweder einer Portion oder einem Bruchteil davon (z.B. 26g).

Die Abdeckung 13 ist über in der Nähe der Randkante 14a angeordnete Zapfen 16 in entsprechenden Lagerböcken 17 am Gehäuse 9 derart schwenkbar gelagert, daß die Abdeckung 13 um eine sich mittig, d.h. diametral, über die Einfüllöffnung 11 erstreckende Schwenkachse 18 verschwenken läßt.

Zum manuellen Verschwenken enthält die Abdeckung 13 einen Handgriff 19, bei dessen Anlage an das Gehäuse 9 die Abdeckung geschlossen ist. Weiterhin ist ein Anschlag 20 vorgesehen, der durch die Anlage am Gehäuse 9 die Schwenkbewegung in Offensteilung begrenzt. An der dem Handgriff 19 abgewandten Seite ist die Randkante 14a der ansonsten halbkugelig ausgebildeten Wandung 14 etwas über die Halbkugelform verlängert und bildet eine Abweisverlängerung 21, deren Zweck weiter unten näher erläutert wird.

Die Schutzvorrichtung 12 enthält weiterhin eine Sperreinrichtung 22 mit einem Riegel 23 und einen Sensor 24. Der Riegel 23, beispielsweise in Form eines Sperrbolzens, wird durch eine im Gehäuse 9 untergebrachte Magnetspule 25 in Fig. 2 nach links und rechts verschoben, erstreckt sich in das Innere des Trichters 10 hinein und liegt in seiner ausgefahrenen Stellung im Verschwenkweg der Abdeckung 13, so daß die Einfüllöffnung 11 nicht freigelegt werden kann, wenn sich der Riegel 23 in der in Fig. 2 gezeigten, ausgefahrenen Stellung befindet.

Der Sensor 24 stellt die An- bzw. Abwesenheit des Handgriffes 19 in seiner in Fig. 2 gezeigten Auflagestellung auf dem Gehäuse 9 fest und ist bevorzugt mit einem Zählglied verbunden, durch das festgestellt werden kann, wie oft der Handgriff 19 angehoben wurde. Der Sensor 24 ist bevorzugt ein Reed-Schalter, und ist zusammen mit der Magnetspule 25 mit der Steuerung der Kaffeemaschine verbunden. Die Steuerung kann beispielsweise so ausgestaltet sein, daß der Riegel 23 selbsttägig in die Sperrstellung verschoben wird, sobald der Sensor 24 festgestellt hat, daß der Handgriff 19 bereits so oft angehoben wurde, daß beim nächsten Eindosieren eine Überfüllung der Brüheinrichtung 5 droht.

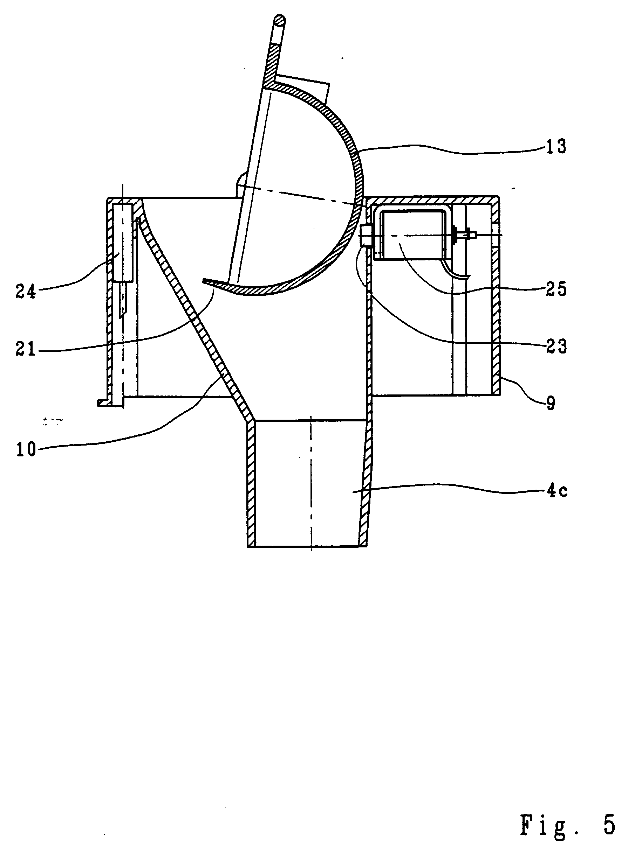

In einem Bereich 10a des Einfülltrichters 10, der sich an die Einfüllöffnung 11 nach unten hin anschließt, ist die Innenkontur des Einfülltrichters 10 an die Außenkontur der Abdeckung 13 so angepaßt, daß die Abdeckung 13 aus der in Fig. 2 gezeigten Stellung in die in Fig. 4 gezeigte Stellung um die Schwenkachse 18 verschwenkt werden kann, sobald der Riegel 23 durch die Magnetspule 25 in seine unwirksame Stellung zurückgezogen wurde und in beiden Stellungen die Einfüllöffnung 11 verschließt. In der in Fig. 4 gezeigten Stellung liegt die Aufnahmeöffnung 15 des Innenraumes 13a der Abdeckung 13 nach oben hin offen, so daß in den Innenraum 13a per Hand Kaffeemehl eingefüllt werden kann. Trotzdem verschließt die Abdeckung 13 nach wie vor den Einfülltrichter 10 und den Zugang zur Zufuhrleitung 4c, so daß das Kaffeemehl nur in den Innenraum 13a gelangen kann. Ist der Innenraum 13a gefüllt, so wird die Abdeckung 13 aus der in Fig. 4 gezeigten Aufnahmestellung für Kaffeemehl, über die in Fig. 5 gezeigte Zwischenstellung in die in Fig. 2 gezeigte Abgabestellung zurückverschwenkt, in der sich der Innenraum 13a in den Einfülltrichter 10 entleert.

Dieser Vorgang kann gegebenenfalls durch eine Feder unterstützt werden, die beispielsweise in einem der Lagerböcke 17 untergebracht ist und beim Öffnen der Abdeckung 13 gespannt wird.

Wie Fig. 5 zeigt, sorgt die Abweisverlängerung 21 dafür, daß der Zugang zum Einfülltrichter 10 und somit zur Zufuhrleitung 4c so lange wie möglich, auch in Zwischenstellungen zwischen der Aufnahme- und der Abgabeposition, gesperrt bleibt, d.h. bevorzugt so lange, bis die Abdeckung 13 so weit geschlossen ist, daß der Spalt zu klein ist, um noch Kaffeemehl direkt in den Einfülltrichter 10 manuell nachfüllen zu können.

In Abwandlung des beschriebenen und gezeichneten Ausführungsbeispiels kann die Schutzvorrichtung beispielsweise nur durch die als Dosierbehälter ausgebildete Abdeckung oder nur durch eine steuerungstechnische Sperreinrichtung gebildet sein, beispielsweise zum Schließen der Einfüllöffnung bei Gefahr einer Überfüllung, zum Ausgeben eines Warnsignals und Verzögern der Einleitung eines Brühvorganges, bis das überschüssige Kaffeemehl aus dem Trichter entfernt worden ist, und dergleichen. Die Abdeckung muß nicht unbedingt verschwenkbar, sondern kann beispielsweise auch verschiebbar sein. Die Form einer verschwenkbaren Abdeckung ist nicht auf die gezeigte Halbkugelform beschränkt, sondern kann jede rotationssymmetrische Form um die Schwenkachse annehmen, beispielsweise als halber Hohlzylinder oder dergleichen ausgebildet sein. Auch unregelmäßige Formen sind unter Umständen denkbar, wenn die Möglichkeit einer Dosierung im Vordergrund steht und die vollständige Überdeckung der Einfüllöffnung beim Dosieren nicht unbedingt erforderlich ist.

## Patentansprüche

1. Kaffeemaschine mit einer selbsttätig arbeitenden Brüheinrichtung und einer Handeinwurf-Einrichtung mit einer Einfüllöffnung zum manuellen Eingeben von Kaffeemehl in die Brüheinrichtung, **gekennzeichnet durch** eine der Handeinwurf-Einrichtung (8) zugeordnete Schutzvorrichtung (12) zum Verhindern einer Überfüllung der Brüheinrichtung (5) mit Kaffeemehl.

2. Kaffeemaschine nach Anspruch 1, **dadurch gekennzeichnet**, daß die Schutzvorrichtung (12) als Dosiereinrichtung für Kaffeemehl ausgebildet ist.

3. Kaffeemaschine nach Anspruch 1 oder 2, **dadurch gekennzeichnet**, daß die Schutzvorrichtung (12) eine bewegbare Abdeckung (13) für die Einfüllöffnung (11) enthält.

4. Kaffeemaschine nach Anspruch 3, **dadurch gekennzeichnet**, daß die Abdeckung (13) als Dosierbehälter für Kaffeemehl ausgebildet ist.

5. Kaffeemaschine nach Anspruch 4, **dadurch gekennzeichnet**, daß die Abdeckung (13) aus einer Aufnahmestellung, in der Kaffeemehl in den Dosierbehälter eingebbar ist, in eine Abgabestellung, in der das Kaffeemehl aus dem Dosierbehälter in die Brüheinrichtung (5) abgebbar ist, bewegbar ist.

6. Kaffeemaschine nach Anspruch 5, **dadurch gekennzeichnet**, daß die Einfüllöffnung (11) durch die Abdeckung (13) sowohl in der Aufnahmestellung als auch in der Abgabestellung verschlossen ist.

7. Kaffeemaschine nach Anspruch 5 oder 6, **dadurch gekennzeichnet**, daß die Einfüllöffnung (11) durch die Abdeckung (13) in einer Zwischenstellung zwischen der Aufnahme- und der Abgabestellung verschlossen ist.

8. Kaffeemaschine nach einem der Ansprüche 3 bis 7, **dadurch gekennzeichnet**, daß die Abdeckung (13) um eine sich quer über die Einfüllöffnung (11) erstreckende Schwenkachse (18) verschwenkbar ist.

9. Kaffeemaschine nach Anspruch 8, **dadurch gekennzeichnet**, daß die Abdeckung (13) eine Wandung (14) mit einer Außenkontur aufweist, die zumindest über den Verschwenkwinkel rotationssymmetrisch um die Schwenkachse (18) verläuft, daß die Wandung (14) mit einer Randkante (14a) eine Aufnahmeöffnung (15) für Kaffeemehl begrenzt, und daß ein sich an die Einfüllöffnung (11) anschließender Bereich (10a) des Handeinwurfs (8) mit einer an die Außenkontur angepaßten Innenkontur versehen ist, so daß die Abdeckung (13) in ihrer Aufnahmestellung mit nach oben weisender Aufnahmeöffnung (15) in die Einfüllöffnung (11) hineingeschwenkt ist und diese verschließt.

10. Kaffeemaschine nach Anspruch 9, **dadurch gekennzeichnet**, daß an der Randkante (14a) eine Abweisverlängerung (21) zum Verschließen der Einfüllöffnung (11) auch in einer Zwischenstellung der Abdeckung (13) vorgesehen ist.

11. Kaffeemaschine nach einem der Ansprüche 3 bis 10, **dadurch gekennzeichnet**, daß die Abdeckung (13) durch eine Feder in Richtung auf eine Stellung belastet ist, in der sie die Einfüllöffnung (11) verschließt.

12. Kaffeemaschine nach einem der Ansprüche 1 bis 11, **dadurch gekennzeichnet**, daß die Schutzvorrichtung (12) eine steuerbare Sperreinrichtung (22) aufweist.

13. Kaffeemaschine nach Anspruch 12, **dadurch gekennzeichnet**, daß die Sperreinrichtung (22) einen Riegel (23) enthält, mit dem eine Abdeckung (13) in einer die Einfüllöffnung (11) verschließenden Stellung verriegelbar ist.

14. Kaffeemaschine nach einem der Ansprüche 3 bis 13, **dadurch gekennzeichnet**, daß die Schutzvorrichtung (8) einen Sensor (24) zum Feststellen der Position der Abdeckung (13) und/oder zum Feststellen eines Bewegungsvorgangs an der Abdeckung (13) enthält.

15. Kaffeemaschine nach Anspruch 13 oder 14, **dadurch gekennzeichnet**, daß der Sensor (24) den Riegel (23) steuert.

16. Handeinwurf-Einrichtung mit einer durch eine Abdeckung verschließbaren Einfüllöffnung, für eine Kaffeemaschine mit einer selbsttätig arbeitenden Brüheinrichtung, **dadurch gekennzeichnet**, daß die Abdeckung (13) als Dosierbehälter für Kaffeemehl ausgebildet ist.
